(19) Europäisches Patentamt
European Patent Office
Office européen des brevets

(11) Publication number: **0 356 047 A2**

(12) # EUROPEAN PATENT APPLICATION

(21) Application number: 89307926.9

(51) Int. Cl.4: C08G 65/32 , C08G 59/50

(22) Date of filing: 03.08.89

(30) Priority: 18.08.88 GB 8819661

(43) Date of publication of application: 28.02.90 Bulletin 90/09

(84) Designated Contracting States: BE DE ES FR GB IT NL SE

(71) Applicant: BP Chemicals Limited
Belgrave House 76 Buckingham Palace Road
London, SW1W 0SU(GB)

(72) Inventor: Dobson, Ian David BP Chemicals Limited
Salt End Hedon
Hull HU12 8DS(GB)
Inventor: Williams, Peter Sefton BP Chemicals Limited
Salt End Hedon
Hull HU12 8DS(GB)

(74) Representative: Richardson, Derek et al
BP INTERNATIONAL LIMITED Patents & Agreements Division Chertsey Road
Sunbury-on-Thames Middlesex TW16 7LN(GB)

(54) **Primary or secondary amine terminated polyethers.**

(57) A primary or secondary amine terminated polyether in which the amine group is attached directly to the terminal methylene group of an ethoxy or hydrocarbyl-substituted ethoxy group, provided that for primary amine terminated polyethers the polymer contains greater than 30 carbon atoms.

EP 0 356 047 A2

# PRIMARY OR SECONDARY AMINE TERMINATED POLYETHERS

The present invention relates generally to polymeric primary amines and in particular to primary or secondary amine terminated polyethers in which the amino group is attached directly to the carbon atom of a methylene group, provided that for primary amine terminated polyethers the polymer contains greater than 30 carbon atoms.

The catalytic reductive amination of lower molecular weight alkylene oxides, hydroxy-containing compounds, aldehydes and ketones by reaction with ammonia, primary or secondary amines, optionally in the presence of hydrogen gas, is well-known. Representative of the art may be mentioned our copending European application publication No. 0284398 (BP Case No. 6586) which discloses a process for the production of an amine by reacting at elevated temperature a first reactant which is either an alcohol, an aldehyde or a ketone with a second reactant which is either ammonia, a primary or a secondary amine or a nitrile in the presence as catalyst of a composition comprising (i) nickel, (ii) ruthenium, and (iii) at least one other transition metal selected from either the second or third row transition metals. Alcohols which are useful in the aforesaid process are alkanols containing no more than 30 carbon atoms, alkoxypolyalkylene glycols containing no more than 30 carbon atoms and diols and their ether and polyether derivatives, provided that the total number of carbon atoms does not exceed 30 in the case of a primary alcohol.

Amines, and particularly the higher molecular weight amines, are useful in the manufacture of polyureas and polyurethane/polyureas by reaction with isocyanates and of epoxy coatings by reaction with epoxides. However, the direct formation of the higher molecular weight amines by reductive amination of a primary hydroxyl function has hitherto been impossible to achieve in the case of the high molecular weight polyether alcohols having one, two or more hydroxyl functions at least one of which is a primary hydroxyl group. Amination of lower molecular weight primary hydroxyl functions is normally achievable only under forcing reaction conditions, for example pressures greater than 750 psig, for other higher molecular weight alcohols. Representative of the art relating to the high pressure process may be mentioned US Patents Nos. 3,838,076, 4,181,682, 3,847,992, 4,612,335 and 4,618,717.

In particular US-A-4618717 relates to the reductive amination of short-chain polyethers. There is disclosed therein a catalytic process for the substantially selective conversion of oxyethylene glycol monoalkyl ethers to primary amines wherein the monoalkyl ether is brought into contact with a catalyst containing nickel, copper and at least one of the oxides of chromium, iron, titanium, thorium, zinc, zirconium or manganese in the presence of about 4 to about 25 moles of ammonia per mole of monalkyl ether and about 0.01 to about 1 mole of hydrogen per mole of monoalkyl ether at a temperature within the range of about 175° to about 250°C and a pressure within the range of about 500 to about 5000 psig. The oxyethylene glycol monoalkyl ethers useful in the process of the invention are those having the formula:-

$R(OCH_2CH_2)_x OH$

wherein R is an alkyl group containing 1 to 10 carbon atoms and x is an integer having a value of about 1 to about 5 and the primary amine product has the formula:-

$R(OCH_2CH_2)_x NH_2$

The process of US Patent No. 4,618,717 is therefore one for producing essentially low molecular weight polymeric primary amines.

US Patent No. 4,181,682 is concerned with high molecular weight polymeric primary amines. In particular, US Patent No. 4,181,682 claims a polymer composition comprising a polymeric amine having the following structural formula:

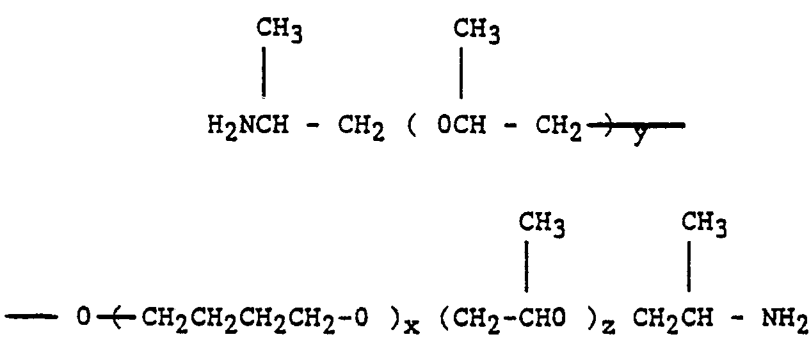

where x is an average number ranging from about 6 to 50, and y and z are average numbers ranging from

about 1 to about 20 with the sum of y and z being from 6 to about 40. The disclosure at column 2, lines 38 to 47, reads as follows:-

"It is interesting to note that one cannot directly aminate the polybutanediol by means of conventional reductive amination catalysts such as nickel-based catalysts. It was discovered here that when such direct reductive amination is carried out hydrogenolysis occurred. Thus, in order to avoid such hydrogenolysis it was found that the primary alcohol must be transformed into a secondary alcohol by means of the propylene oxide reaction to make the resultant diol amenable to reductive amination".

Thus, it was found impossible in US Patent No. 4,181,682 to reductively aminate the primary hydroxyl function directly. Other patent publications, for example US Patent No. 3,838,076, imply that primary hydroxyl functions cannot be reductively aminated in a high molecular weight alcohol.

We have now found that primary hydroxyl-containing polymeric materials can be reductively aminated to provide novel polymeric primary amines.

Accordingly, the present invention provides a primary or secondary amine terminated polyether in which the amine group is attached directly to the terminal methylene group of an ethoxy or hydrocarbyl-substituted ethoxy group, provided that for primary amine terminated polyethers the polymer contains greater than 30 carbon atoms.

In the primary or secondary amine terminated polyethers of the present invention the amine group is attached directly to the terminal methylene group of an ethoxy or hydrocarbyl-substituted ethoxy group. This may be represented structurally as follows:-

$$-O-\underset{\displaystyle R}{\underset{|}{CH}}-CH_2-NHR^1 \qquad (I)$$

wherein R and $R^1$ are independently hydrogen or hydrocarbyl groups, the hydrocarbyl groups suitably being alkyl groups. Preferably R is either hydrogen or a $C_1$ to $C_4$ alkyl group, more preferably R is either hydrogen or a methyl group. $R^1$ may suitably be a $C_1$ to $C_{30}$ alkyl group.

The primary and secondary amine terminated polyethers may be derived from polyether alcohols having one, two or more hydroxyl functions, at least one of which is a primary hydroxyl function.

In one embodiment of the present invention there is provided a primary or secondary amine terminated polyether having the formula:-

$$R^2 \left( O-\underset{\displaystyle R}{\underset{|}{CH}}-CH_2 \right)_x NHR^1 \qquad (II)$$

wherein $R^2$ is a hydrocarbyl group or a hetero-substituted hydrocarbyl group, preferably containing from 1 to 30 carbon atoms, more preferably a $C_1$ to $C_{30}$ alkyl group, provided that when $R^1$ = H, the polymer contains greater than 30 carbon atoms. Hetero-substituted hydrocarbyl groups may suitably be substituted with nitrogen or oxygen as the hetero-substituent.

The compounds of formula (II) are derivable from oxyalkylene glycol monoalkyl ethers of the formula:-

$$R^2 \left( O-\underset{\displaystyle R}{\underset{|}{CH}}-CH_2 \right)_x OH \qquad (III)$$

wherein R and $R^2$ are as defined for formula (II), ie a polyether alcohol having one hydroxyl function.

In another embodiment the present invention also provides a primary or secondary amine terminated polyether which is a primary or secondary amine functionalised polyether diol or polyol having the formula:-

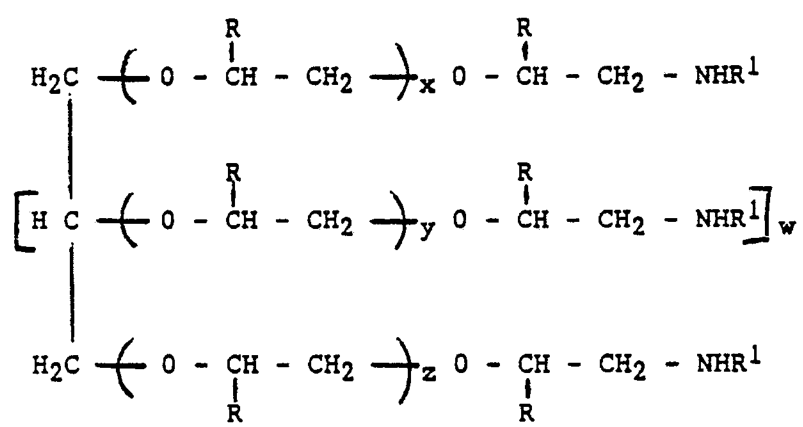

(IV)

wherein R and $R^1$ are as defined for the formula (I), and w,x,y and z are integers having the following values:-

w = 0,1,2,3 or 4

x,y and z = independently greater than or equal to 5.

In the compound of formula (IV), generally the R groups will be the same.

Examples of primary amine functionalised polyether polyols having the formula (IV) include:-

(i)

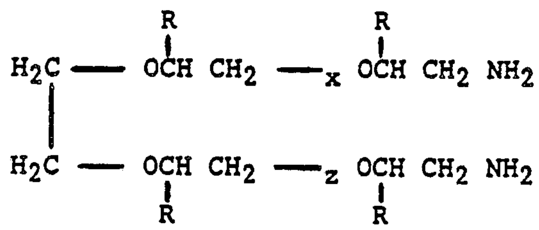

(V)

wherein R is either H or methyl and x and z have the values assigned in formula (IV).

(ii)

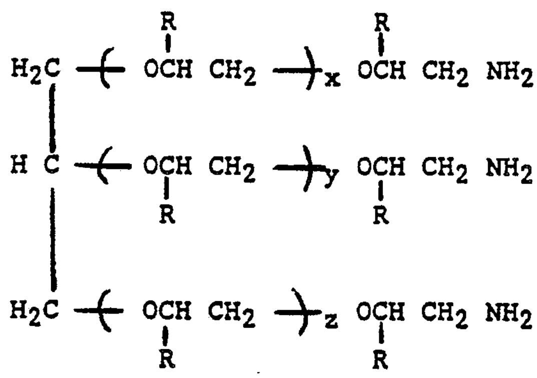

(VI)

wherein R is either H or methyl and x, y and z have the values assigned in formula (IV).

Examples of secondary amine functionalised polyether polyols having the formula (IV) include:-

(i)

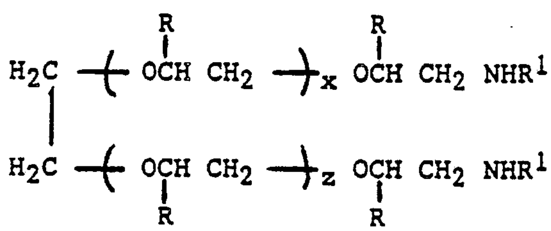

(VII)

wherein R is either H or methyl

$R^1$ is as defined for the formula (IV), and

x and z have the values assigned in formula (IV)

(ii)

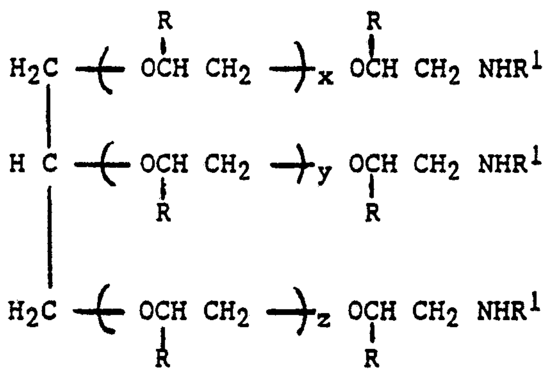 (VIII)

wherein R is either H or methyl
$R^1$ is as defined for the formula (IV), and
x, y and z have the values assigned in formula (IV).

The novel compounds of the present invention may suitably be prepared by the process described in our copending UK application No. 8819663.9 (BP Case No. 6993). Thus, a first reactant which is a polyether alcohol having one, two or more hydroxyl functions at least one of which is a primary hydroxyl function may be reacted with a second reactant which is either ammonia or a primary or a secondary amine at elevated temperature in the presence of hydrogen or a source of hydrogen and a reductive amination catalyst in either a continuously open or periodically open system.

In a preferred embodiment of the present invention hydrogen and the second reactant in the gaseous phase are contacted at elevated temperature either continuously or intermittently with the first reactant in the liquid phase and a reductive amination catalyst to form a product comprising an amine, water and unreacted gas, and from the product there is removed either continuously or intermittently water and unreacted gas.

It is preferred to contact hydrogen and the second reactant continuously with the first reactant and catalyst and to continously remove water and unreacted gas.

The water and unreacted gas removed from the product may be separated either wholly or partially, suitably by condensing the water, and the unreacted gas so-separated may be recycled to the reaction.

The process can be operated at atmospheric pressure which may provide advantages in terms of lower capital expenditure and operating costs, when compared with the prior art elevated pressure processes.

As the second reactant there may be used either ammonia or a primary or secondary amine. The amine may be either an aliphatic or an aromatic amine. Suitably the amine may be a primary aliphatic amine. The amine may suitably contain from 1 to 30 carbon atoms.

Hydrogen of commercial purity may be used, with or without further purification.

As catalyst there may be used any reductive amination catalyst. Nickel-containing catalysts are preferred. Powdered elemental nickel, Raney nickel and supported nickel, for example nickel supported on gamma-alumina, may all be used as catalysts.

A preferred catalyst is a composition comprising (i) nickel, (ii) ruthenium, and (iii) at least one other transition metal selected from either the second or third row transition metals.

As regards the catalyst composition, any transition metal other than ruthenium may be used as component (iii). In the context of this specification the term 'transition metal' is defined as a metal having a partially filled 4d or 5d shell in at least one of its oxidation states. Suitable transition metals include palladium, rhenium and iridium, either individually or in combination.

Preferably, the catalyst composition is supported on a suitable support. Suitable supports include aluminas, silicas, silica-aluminas and carbons. A preferred support is gamma-alumina. Zeolites may also be used as supports.

As regards the relative proportions of components (i), (ii) and (iii) in the catalyst composition, the major component will generally be component (i), i.e. nickel, and components (ii), i.e. ruthenium, and (iii) i.e. transition metal(s) will be minor components. Thus, nickel may suitably form from 50 to 95% by weight of the catalyst composition and together ruthenium and transition metal may form the remainder of the composition. Typically the supported catalyst composition may contain about 10% nickel and 1% each of ruthenium and transition metal(s), the remainder of the composition being the support. However, higher nickel loadings may be used if desired.

The catalyst composition may be prepared by any of the methods conventionally employed for the production of catalysts, for example by precipitation or by impregnation. The supported composition is

suitably prepared by an impregnation technique, which may be by co-impregnation or by sequential impregnation, preferably the latter. Impregnation techniques are well-known in the art and include both the incipient wetness technique and the excess solution technique.

A preferred process for producing a catalyst composition for use in the process of the present invention comprises the steps of (A) impregnating a support with a solution of a compound of nickel, (B) calcining the nickel compound present in the impregnated support obtained in step (A), (C) impregnating the impregnated support obtained in step (B) with a solution of a compound of a transition metal selected from either the second or third row transition metals, (D) impregnating the impregnated support obtained in step (C) with a solution of a compound of ruthenium, and (E) activating the composition obtained in step (D).

Optionally, after step (C), the catalyst may be contacted with either hydrogen or air at elevated temperature. The elevated temperature may suitably be in the range from 250 to 500 °C, preferably from 250 to 350 °C, for contact with hydrogen and from 500 to 600 °C for contact with air.

Suitable compounds of the metals include salts of the metals, for example the nitrates, halides and carboxylates. The compounds of the metals are used in the form of solutions thereof. Any suitable solvent may be employed for this purpose. A convenient solvent is water, though other solvents, such as for example alcohols, may be employed.

In step (B) of the process for producing the catalyst the compound of nickel present in the impregnated support obtained in step (A) is calcined. Calcination may suitably be accomplished at a temperature in the range from 550 to 600 °C, typically about 580 °C, though lower temperatures may be employed.

Activation (step E) may suitably be accomplished by heating the composition at elevated temperature, suitably greater than 280 °C in the presence of a reducing gas, for example hydrogen, for a period sufficient to activate the catalyst, typically for at least 3 hours and thereafter allowing the catalyst to cool in the presence of an inert gas, for example nitrogen. The activation step (step E) may be carried out as a further step in the preparative method, or may be carried out in the reductive amination reactor immediately prior to operation of the process of the invention, or both.

Further details of this catalyst and its preparation may be found in our copending European application publication No. 0284398 (BP Case No. 6586).

The process may be operated at a temperature in the range from 150 to 350 °C, preferably from 200 to 300 °C. Atmospheric pressure or slightly above may suitably be employed.

The process may be operated batchwise or continuously. Generally, it will be necessary to separate the catalyst from the liquid product of the reaction. This may suitably be accomplished by filtration or centrifugation or by the use of a fixed catalyst bed.

As an alternative to operating the process in an open or periodically open reactor system at low pressure, the process may be operated in a reactor at pressures above atmospheric pressure, for example in the range from 10 to 300 bar, provided that under such conditions a water-absorbing material is present. Water absorbing materials include zeolites, aluminas, anhydrous metal salts, partially hydrated metal salts and silica gels. A preferred water-absorbing material is a 4A zeolite. Preferably the zeolite is activated before use by heating at above 100 °C in a flow of dry inert gas, for example nitrogen, or by heating at above 100 °C under reduced pressure. The amount of water-absorbing material employed is preferably sufficient to be capable of absorbing the quantity of water which could be generated by complete reaction of the polyether to an amine terminated polyether.

As mentioned hereinbefore, the novel compounds according to the present invention are useful in the production of polyureas or polyurethane/polyureas and epoxy coatings.

In another aspect therefore the present invention provides a process for the production of a polyurethane which process comprises reacting a compound as hereinbefore described with a diisocyanate.

In a final aspect the present invention provides a process for the production of an epoxy resin which process comprises reacting a compound as hereinbefore described with an epoxide.

In polyurethane formation with diisocyanates, the primary hydroxyl group cures around three times faster than a methyl-substituted (secondary) hydroxyl group. A similar rate enhancement may be seen with an amine group attached to a primary carbon atom as compared with an amine group attached to a secondary carbon atoms, though since the amine group can cure over 100 times as fast as the alcohol from which it is derived, the novel compounds containing a primary amine group attached to a methylene group potentially offer exceedingly high reactivity. This could be exploited in a number of ways. For example, rapid curing of polyurethane or epoxy coatings could be achieved even at low temperatures. Alternatively, the enhanced amine reactivity may permit the use of less reactive epoxides or isocyanates than are conventionally employed. This would be of considerable advantage using aliphatic isocyanates, which although they react slowly to form polyurethanes, have the benefit for coatings of colour stability in the presence of air or light.

The invention will now be further illustrated by reference to the following Examples.

Example 1

20 g of polyether polyol type C 1634, a glycerol started polyether polyol having a molecular weight of about 4800 and substantially having three primary hydroxyl functions per molecule due to ethylene oxide termination, was placed in a 250 ml glass reactor. 3g of water washed (to pH 7) raney nickel (ex Aldrich Chemical Company) was added to the polyol. The reactor was provided with an ammonia/hydrogen sparge and an outlet leading to a take off condenser. Hydrogen and ammonia in a ratio greater than 3:1 was sparged into the polyol catalyst mixture at atmospheric pressure. The reactor was heated to 200°C and the sparge continued at this temperature for 6 hours. The sparge was then altered so as to be of hydrogen only and this was continued for a further hour. The reactor was then cooled and the product removed. After separation of the nickel catalyst, amination of over 50% of the hydroxyl functions was indicated by $^{13}C$ NMR and the spectrum indicated that the end group $-CH_2-NH_2$ had been formed.

This example demonstrates the synthesis of a polyether primary amine according to the invention using an open reactor system at atmospheric pressure.

Example 2

This example demonstrates the synthesis of a polyether with primary amine groups according to the invention using a sealed reactor system and a water-absorbing material.

5g of polyether type CP3, a glycerol started polyether synthesised from propylene oxide and ethylene oxide with a molecular weight in the region of 4800 and substantially having three primary hydroxyl functions per molecule, was charged into a magnetically stirred 70ml stainless steel reactor. 0.5g of a 10% nickel/1% rhenium/1% ruthenium on gamma alumina catalyst and 2g of Linde type 4A zeolite (previously dried under vacuum at 110°C overnight) were also charged. The reactor was then cooled to -78°C and 10ml of liquid ammonia was condensed into the reactor which was then connected to a gas manifold and allowed to warm to room temperature. Hydrogen was charged into the reactor to a pressure of34 bar and the reactor was heated to 220°C for 6 hours. The product was then removed from the reactor and filtered. The clear liquid product had 25% primary amine terminal groups, these being attached to methylene groups as indicated by $^{13}C$ NMR.

Example 3

This example demonstrates the synthesis of a polyether with secondary amine groups according to the present invention, using a sealed reactor system and a water-absorbing material.

5g of polyether polyol type CP3 (as described in Example 2) was charged into a magnetically stirred 70ml stainless steel reactor along with 0.5g of a 10% nickel/1% rhenium/1% ruthenium on gamma-alumina catalyst. 2.0g of Linde type 4A zeolite (previously dried under vacuum at 110°C overnight) was then added to the reactor along with 1.85g of n-propylamine (ex. Aldrich Chemical Company). The reactor was then connected to a gas manifold and first purged with hydrogen. A pressure of 34 bar of hydrogen was applied to the reactor which was then heated to 285°C for 12 hours.

The product was then removed from the reactor. It was dissolved in 10ml of methanol and then filtered through a Whatman type 4 filter paper to remove the catalyst. Methanol and unreacted propylamine were then removed by distillation under reduced pressure at 70°C. The resulting clear liquid product had 37% N-propylamine, 23% primary amine termination and 40% hydroxyl termination as indicated by $13_c$ NMR.

Example 4

0.5g of the product of Example 1 was placed in a glass vessel. 0.05g of methylene diisocyanate was added to the vessel with rapid stirring at 20°C. An elastomeric solid was almost immediately produced with curing of the amine groups having taken place in under one second.

This example demonstrates the use of a polyether polyamine according to the invention in the formation of a polyurethane/polyurea elastomer.

Example 5

The reactor of Example 3 was charged with 0.5g of the Ni/Re/Ru/gamma-alumina catalyst, 2g of activated 4A zeolite, 10g of polyether polyol CP3, 5g of n-hexane and 5ml of liquid ammonia. The reactor was connected to a gas manifold and pressurised with hydrogen to 14 bar at room temperature. The reactor was then heated to 220°C for 12 hours. The product recovered was filtered and the hexane removed by evaporation to give a clear liquid product which was shown to contain the end group $-O-CH_2-CH_2-NH_2$ as evidenced by a singlet signal at 49 ppm in the $^{13}C$ NMR spectrum of the product.

Comparison Test

The reactor of Example 3 was charged as described in Example 5 except that no 4A zeolite was added. The reaction was performed as described in Example 5 and the product examined by $^{13}C$ NMR. No signal was evident in the region of the spectrum from 45 to 55 ppm indicating that $-O-CH_2-CH_2-NH_2$ groups had not been formed.

This Test demonstrates that the water-absorbing material must be present in a sealed reactor system in order to produce an amine terminated polyether according to the present invention.

**Claims**

1. A primary or secondary amine terminated polyether in which the amine group is attached directly to the terminal methylene group of an ethoxy or hydrocarbyl-substituted ethoxy group, provided that for primary amine terminated polyethers the polymer contains greater than 30 carbon atoms.

2. A primary or secondary amine terminated polyether according to claim 1 wherein the terminal group is of the structural formula:-

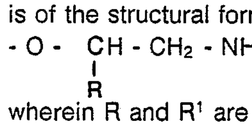 (I)

wherein R and $R^1$ are independently hydrogen or hydrocarbyl groups.

3. A polyether according to claim 2 wherein R is either hydrogen or a $C_1$ to $C_4$ alkyl group.

4. A polyether according to claim 2 wherein R is hydrogen.

5. A polyether according to claim 2 wherein R is methyl.

6. A polyether according to any one of claims 2 to 5 wherein $R^1$ is hydrogen.

7. A polyether according to any one of claims 2 to 5 wherein $R^1$ is a $C_1$ to $C_{30}$ alkyl group.

8. A primary or secondary amine terminated polyether according to any one of the preceding claims having the formula:-

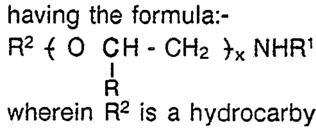 (II)

wherein $R^2$ is a hydrocarbyl group or a hetero-substituted hydrocarbyl group, and R and $R^1$ are as defined for the formula (I).

9. A polyether according to claim 8 wherein $R^2$ is a $C_1$ to $C_{30}$ alkyl group.

10. A primary or secondary amine terminated polyether according to any one of claims 1 to 7 having the formula:-

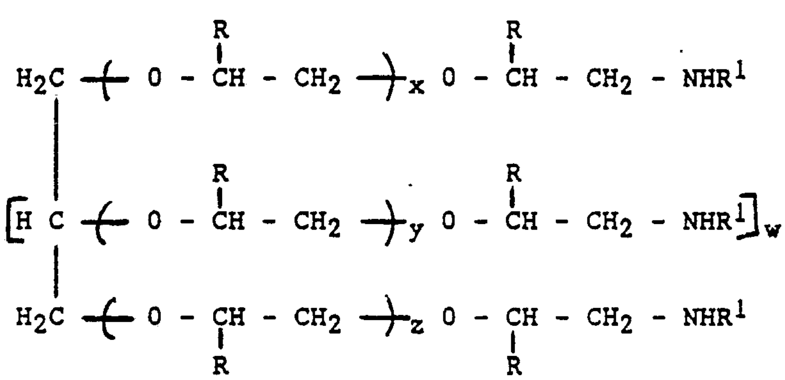 (IV)

wherein w, x, y and z are integers having the following values:-

w = 0,1,2,3 or 4

x,y and z = independently greater than or equal to 5, and R and $R^1$ are as defined for the formula (I).

11. A primary or secondary amine terminated polyether according to any one of claims 8 to 10 wherein R is either H or methyl.

12. A process for the production of the primary or secondary amine terminated polyether of claims 1 to 11 which process comprises reacting a first reactant which is a polyether alcohol having one, two or more hydroxyl functions at least one of which is a primary hydroxyl function attached directly to the terminal methylene group of an ethoxy or hydrocarbyl-substituted ethoxy group with a second reactant which is either ammonia or a primary or secondary amine at elevated temperature and a pressure above atmospheric in the presence of hydrogen, a reductive amination catalyst and a water-absorbing material.

13. A process according to claim 12 wherein the pressure is in the range from 10 to 300 bar.

14. A process according to either claim 12 or claim 13 wherein the water-absorbing material is a 4A zeolite.

15. A process for the production of a polyurethane which process comprises reacting either at least one primary or secondary amine terminated polyether as claimed in claims 1 to 11, or a mixture of at least one primary amine terminated polyether as aforesaid and at least one secondary amine terminated polyether as aforesaid with a diisocyanate.

16. A process for the production of an epoxy resin which process comprises reacting either at least one primary or secondary amine terminated polyether as claimed in claims 1 to 11 or a mixture of at least one primary amine terminated polyether as aforesaid and at least one secondary amine terminated polyether as aforesaid with an epoxide.